# EUROPEAN PATENT SPECIFICATION

(11) **EP 3 589 877 B1**
(45) Date of publication and mention of the grant of the patent: **10.03.2021**
(21) Application number: 18702430.2
(22) Date of filing: 18.01.2018
(51) Int. Cl.: F16L 37/098, F16L 37/133, F16L 37/138

(54) **QUICK CONNECTOR**
SCHNELLVERBINDER
RACCORD RAPIDE

(30) Priority: 01.03.2017 DE 102017001884
(43) Date of publication of application: 08.01.2020
(73) Proprietor: Husqvarna AB, 561 82 Huskvarna (SE)
(72) Inventor: RIEDE, Felix, 89542 Herbrechtingen (DE)
(74) Representative: Finkele, Rolf
(86) International application number: PCT/EP2018/051210
(87) International publication number: WO 2018/157995

(56) References cited:
- DE-B3-102007 020 556
- DE-U1-202009 007 897
- US-A- 4 681 350
- US-A- 5 884 943

## Description

The present invention relates generally to the field of quick connectors. More specifically, the present document discloses a quick connector with an improved locking mechanism.

### BACKGROUND OF THE INVENTION

Quick connectors for coupling a hose with a water tap, a hose cart or a spray head are known in prior art. The quick connector comprises a hose receiving portion and - opposite to said hose receiving portion - a receiving area for receiving a male coupling element. The quick connector further comprises a locking mechanism for securing the male coupling element in an inserted position, i.e. in a position in which a portion of the male coupling element is inserted in the receiving area of the quick connector.

US 4,681,350 discloses a quick coupling connection comprising a male element with an outer engagement groove and a receiving portion in the form of a female element to axially receive the male element and provided with two diametrically opposing apertures. Interposed between said female element and, collar, two teeth are inserted into the apertures of the female teeth radially outwardly into engagement with the inner surface of the collar. Elastic means comprise two identical annular elements interposed between strips and in the form of an ellipse with its major axis orthogonal to the axis of the coupling. The annular elements are each curving about their major axis and the strips and annular elements are connected to a common circular base ring resting on a widened part of the receiving portion. Respective projections on the inner surface of the collar against which said elliptical elastic elements press and protuberance on said collar for retaining the teeth in their locking position are provided. The collar has beyond said protuberances widened spaces into which the teeth are inserted by the strips when the teeth are released from the projections. During insertion of a male element the collar is left in its locking position with the protuberances opposing the elastic action of the strips to keep the teeth inserted through the apertures and partly into the receiving portion of the female element. During this insertion stage the male element acts on the teeth to cause them to rotate about their points of contact with the protuberances with simultaneous elastic deformation of the strips and complete emergence from the apertures. In order to release it is necessary only to pull the collar in a direction away against the elastic thrust of rings so that the protuberances become disposed below the teeth to release them and the strips which are no longer retained extract the teeth from the respective apertures.

DE 10 2007 020556 B3 discloses a state of the art quick connector.

Disadvantageously, known locking mechanisms of quick connectors show deficiencies in terms of stability and reliability of the locking mechanism and the assembling effort of the quick connector comprising multiple parts is high.

### SUMMARY OF THE INVENTION

It is an objective of the embodiments of the present invention to provide a quick connector for coupling a hose at a liquid providing or liquid receiving entity which shows an improved locking mechanism. The objective is solved by the features of the independent product claim 1 and by the features of the independent method claim 14. Preferred embodiments are given in the dependent claims. If not explicitly indicated otherwise, embodiments of the invention can be freely combined with each other.

According to an aspect, the invention relates to a quick connector for coupling a hose at a male coupling element. The quick connector comprises a connector main body with a hose receiving portion, a receiving area adapted to receive a portion of said male coupling element and a locking mechanism adapted to lock the male coupling element at the quick connector in a position in which said male coupling element is partially inserted in said receiving area. Said locking mechanism comprises two or more snap hooks adapted to interact with the male coupling element in order to lock the male coupling element in the inserted state and a spring-loaded sleeve movably mounted at the connector main body. Two or more spring elements are provided which are coupled by means of a coupling ring. Said two or more spring elements and the coupling ring are integrally formed at a locking subassembly which is formed by a two-component or multi-component injection moulding element, wherein the coupling ring is secured at the connector main body based on an over-moulded material portion by form-fitted enclosing a contour of the connector main body.

Said quick connector is advantageous because based on using two-component or multi-component injection moulding technique, the spring elements, respectively, the coupling ring can comprise different materials, specifically different polymers. Thereby, certain portions of the locking mechanism can be manufactured with materials which are better suited to the respective application purpose.

According to embodiments, each spring element is built by a single polymer. In other words, all spring element portions are made by or from a certain polymer and the coupling ring may comprise another polymer.

The term polymer herein includes any polymer material and mixtures of polymer materials and co-polymer materials, in particular thermoplastic polymers.

According to embodiments, each spring element comprises multiple portions which are built by different polymers. Thereby it is possible to manufacture each portion with a polymer with properties which fit to the specific task of said portion.

According to embodiments, the coupling ring and the spring elements are at least partially built by different polymers. For example, the spring elements comprise a polymer which is more flexible than the polymer of the coupling ring. Thereby, the spring elements and the coupling ring can be adapted to their field of application.

According to embodiments, two or more snap hooks are integrally formed at the coupling ring. Thereby, the spring elements and the snap hooks may in one embodiment even be assembled within a single assembling step.

According to embodiments, said snap hooks comprise the same or a different polymer than the spring elements, respectively, the coupling ring. Thereby, the snap hook may be manufactured using a polymer which is suitable for snap hook application and the spring elements and/or the coupling ring can be manufactured using polymers which fit to their tasks.

According to embodiments, the snap hook comprises different portions which are made of the same polymer or different polymers. For example, the middle portion of the snap hook may comprise a polymer with increased elasticity and the upper portion and lower portion may comprise one or more different polymers comprising reduced elasticity, respectively, increased hardness. Thereby the flexibility of the snap hooks can be increased.

According to embodiments, the spring elements, snap hooks and the coupling ring may be manufactured using a two-component injection moulding process or multi-component injection moulding process. Multiple polymers may be used which are incompatible such that said polymers no not mix but stay separated from each other. However, said polymers are adhered against each other such that a single-piece element comprising the spring elements, snap hooks and the coupling ring is obtained. Thereby different polymers can be used for building the spring elements, the snap hooks and the coupling ring. Said polymers may comprise properties adapted to the specific tasks of the spring elements, the snap hooks and the coupling ring. In addition, also the spring element and/or the snap hook itself can be manufactured using different polymers, e.g. a harder polymer for the upper portion and a more flexible polymer for the bending portion of the snap hook.

According to embodiments, one or more spring elements are provided between said at least two snap hooks. Said spring elements may be adapted to push a sleeve circumferentially provided at the connector main body in an upper position. In order to deactivate the locking mechanism, the sleeve has to be moved against the spring force of the spring elements in a retracted position.

According to embodiments, said spring element comprises an oval-shaped spring body and/or bar-shaped top and bottom portions. The oval-shaped spring body may extend along an angular range of 30° to 60°. The legs of the oval-shaped spring body provide deformable portions which provide the spring forces. According to other embodiments, the spring body may comprise multiple X-shaped spring portions or may comprise a lattice-like structure. The bar-shaped top and bottom portions provide increased contact surfaces for abutting against the sleeve, respectively, the connector main body. The bar-shaped top and bottom portions may be arranged perpendicular with respect to the central axis of the quick connector.

According to embodiments, said connector main body comprises one or more stop portions at which the snap hooks, the spring elements and/or the coupling ring rest on. Said stop portion may be a protrusion, shoulder or collar radially protruding from the wall portion of the connector main body. Said snap hooks and/or the coupling ring and/or the spring elements may abut against said one or more stop portions. Thereby the stop portion provides a support for said elements.

According to embodiments, the stop portion of the connector main body, the foot portions of the snap hooks, the spring elements and/or the coupling ring are over-moulded using a 2-component- or multi-component-injection moulding technique. Thereby a secure fixing of the snap hooks, the spring elements and/or the coupling ring at the connector main body is obtained. According to other embodiments, the fixing of the coupling element is obtained by a tight fit and/or a form fit of the coupling ring at the connector main body.

According to embodiments, the snap hooks comprise a foot portion, an upper portion forming an engagement portion and a bending portion being arranged between said foot portion and said upper portion. The bending portion comprises a tapered shape, wherein the thickness of the bending portion is increasing towards the upper portion. Said thickness may be measured in radial direction with respect to the central axis of the quick connector.

According to embodiments, the thickness of the bending portion close to the transition area between the upper portion and the bending portion is greater than the thickness of the bending portion in a centre area of said bending portion. Thereby the deflection of the bending portion occurs at a lower bending portion section which is closer to the foot portion than to the upper portion forming the hook portion. Thereby the lever arm of the snap hook is increased in order to provide an improved securing of the male coupling element.

According to embodiments, the thickness of the bending portion close to the transition area between the foot portion and the bending portion is greater than the thickness of the bending portion in a centre area of said bending portion. Thereby the bending of the snap hook is obtained by a deformation of the snap hook in an area between the foot portion and the upper portion in which the thickness of the bending portion is reduced.

According to embodiments, the bending portion of the snap hook is waisted or waist-shaped in a centre area. Thereby the effective length of the lever arm of the snap hook can be chosen as desired.

According to embodiments, the snap hook comprises a front side at which a hook portion (also referred to as engagement portion) protrudes and a back side opposite to said front side, wherein said back side comprises a concave shape. Said hook portion may be directed towards the central axis of the quick connector and may protrude through an opening into the receiving area of the connector main body. The back side may face away from said central axis and may face a movable sleeve arranged around the connector main body. Said movable sleeve may be adapted to deactivate the locking mechanism in order to be able to remove the male coupling element from the quick connector. Due to the concave shape, the bending properties of the snap hook, specifically in the centre area of the bending portion, are further improved.

According to embodiments, said concavely-shaped surface provided at the back side spans from the bending portion into the upper portion. Preferably, there is a steady transition between the upper portion and the bending portion. Thereby a flexible bending portion and a massive, not deformable upper portion of the snap hook are obtained.

According to embodiments, said bending portion thickens towards the foot portion. Thereby, the bending region is shifted towards the centre area of the bending portion, i.e. the bending of the snap hook occurs at a distance from the foot portion.

According to embodiments, the bending portion comprises a straight or concavely-shaped surface at the front side which is arranged in a centre area of said bending portion. Thereby, the space for integrating the snap hooks into the quick connector can be reduced without affecting the bending properties of the snap hooks.

According to embodiments, the snap hook comprises at its front side a rounded, concavely-shaped transition area arranged between the bending portion and the upper portion, specifically the hook portion. Said transition area may form a contact surface which interacts with an edge of an opening provided in the circumferential wall of the connector main body. Thereby, the bending of the snap hook is limited to a certain degree in order to avoid an excessive inward-bending of the upper portion, specifically the hook portion.

According to embodiments, a hook portion provided at the upper portion comprises multiple planar surfaces which are connected by multiple edges or rounded transitions. The inclinations and dimensions of said planar surfaces may be adapted to the groove or recess provided in the male coupling element in order to enable a form-fitted engaging of the hook portion into said groove or recess.

According to a further aspect, a method for manufacturing a quick connector adapted to couple a hose at a male coupling element is disclosed. The quick connector comprises a connector main body with a hose receiving portion, a receiving area adapted to receive a portion of said male coupling element and a locking mechanism adapted to lock the male coupling element at the quick connector in a position in which said male coupling element is partially inserted in said receiving area. Said locking mechanism comprises two or more snap hooks adapted to interact with the male coupling element in order to lock the male coupling element in the inserted state and a spring-loaded sleeve movably mounted at the connector main body. Two or more spring elements are provided which are coupled by means of a coupling ring. Said two or more spring elements and the coupling ring are integrally formed using two-component or multi-component injection moulding and the coupling ring is secured at the connector main body based on an over-moulded material portion by form-fitted enclosing a contour of the connector main body.

According to embodiments, the connector main body comprises a stop portion. Said stop portion of the connector main body and the coupling ring are over-moulded using two-component or multi-component injection moulding. Thereby, a cost-efficient and reliable fixing of the coupling ring (comprising the spring elements) is obtained.

The term "essentially" or "approximately" as used in the invention means deviations from the exact value by +/- 10%, preferably by +/- 5% and/or deviations in the form of changes that are insignificant for the function.

### BRIEF DESCRIPTION OF THE DRAWINGS

The various aspects of the invention, including its particular features and advantages, will be readily understood from the following detailed description and the accompanying drawings, in which:
- Fig. 1: illustrates a lateral view of an example embodiment of a quick connector with snap hooks and spring elements arranged around the connector main body (with removed sleeve);
- Fig. 2: illustrates a perspective view of the spring element according to an example embodiment;
- Fig. 3: illustrates an exploded view of a quick connector according to an example embodiment;
- Fig. 4: illustrates an exploded view of a connector main body and a coupling ring comprising multiple spring elements adapted to be pushed on the connector main body;
- Fig. 5: illustrates a lateral view of an example embodiment of a quick connector with snap hooks and spring elements arranged around the connector main body and fixed by an overmoulding technique;
- Fig. 6: illustrates a sectional illustration of the quick coupler according to Fig. 5;
- Fig. 7: illustrates a sectional view of the quick connector according to Fig. 1 along the cutting line X-X;
- Fig. 8: illustrates a sectional illustration of a snap hook section of the quick connector (indicated by the circle) according to Fig. 7;
- Fig. 9: illustrates a lateral view of a snap hook according to an example embodiment; and
- Fig. 10: illustrates an exploded view of an example quick connector comprising a sleeve with integrated spring elements.

### DETAILED DESCRIPTION OF PREFERRED EMBODIMENTS

The present invention will now be described more fully with reference to the accompanying drawings, in which example embodiments are shown. However, this invention should not be construed as limited to the embodiments set forth herein. Throughout the following description similar reference numerals have been used to denote similar elements, parts, items or features, when applicable.

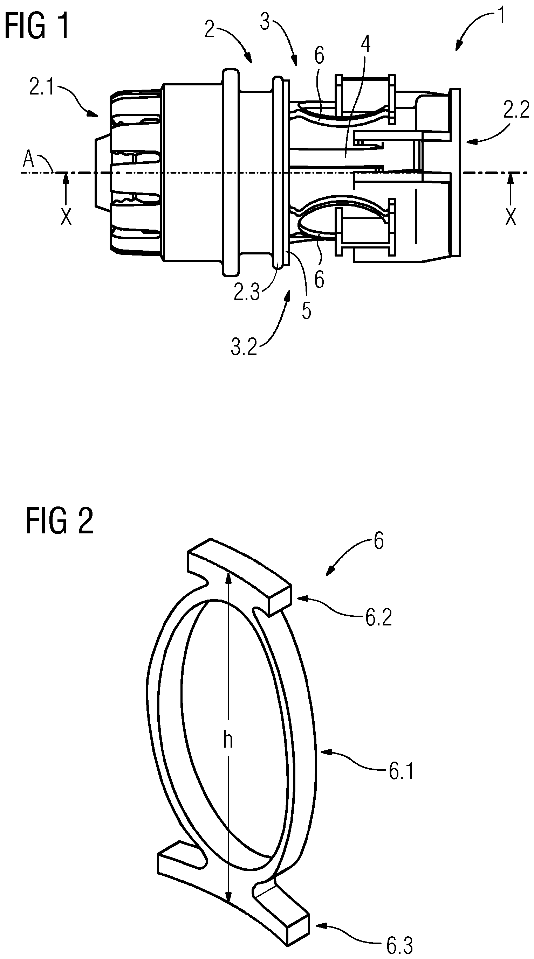

Fig. 1 illustrates an example embodiment of a quick connector 1. The quick connector 1 may be a female coupling element which interacts with a male coupling element in order to provide a detachable connection, for example, between a hose and a water tap.

Said quick connector 1 comprises a connector main body 2 with a hose receiving portion 2.1 and a receiving area 2.2. Said hose receiving portion 2.1 may be adapted to receive a free end of a hose and couple said free end of the hose with a liquid channel provided within the connector main body 2. Said hose receiving portion 2.1 may provide clamping means for clamping the hose at the hose receiving portion 2.1. The receiving area 2.2 is adapted to receive a portion of the male coupling element. Said receiving area 2.2 may be provided opposite to the hose receiving portion 2.1. The receiving area 2.2 may be a recess in which a front portion of the male coupling element can be inserted. In addition, a locking mechanism 3 is provided at the quick connector 1. Said locking mechanism 3 is adapted to secure the male coupling element in the inserted position if said front portion of the male coupling element is inserted in the receiving area 2.2. Said locking mechanism 3 comprises two or more snap hooks 4 which are adapted to interact with a groove or recess provided at the male coupling element in order to lock the male coupling element in the inserted position. Said two or more snap hooks 4 may be circumferentially distributed around the connector main body 2, e.g. equally distributed based on a given angular distance.

The snap hooks 4 are flexible in order to be bent inwardly and outwardly (with respect to a central axis A of the connector main body 2). Each snap hook 4 may comprise an upper portion 4.3 forming an engagement portion or hook portion 4.4 which protrudes through an opening 2.4 provided in the connector main body 2 into the receiving area 2.2. After inserting the male coupling element into the receiving area 2.2, the engagement portion or hook portion 4.4 of each snap hook 4 engages into the groove or recess provided at the male coupling element thereby avoiding that the male coupling element can be pulled out of said receiving area 2.2.

The locking mechanism 3 further comprises a sleeve 3.1 movably, preferably slidably mounted at the quick connector 1. The sleeve 3.1 may surround the connector main body 2 in an area in which said snap hooks 4 are provided. Said sleeve 3.1 is spring-loaded. By means of one or more spring elements 6, the sleeve 3.1 is pushed in a first position. By applying forces to said sleeve 3.1, said sleeve 3.1 can be pushed or pulled in a second position, specifically in a retracted position. Said sleeve 3.1 may interact with the snap hooks 4 such that said snap hooks 4 can not be bent outwardly in case that the sleeve 3.1 is in the first position. In case that the sleeve 3.1 is pushed or pulled in the second position, the snap hooks 4 can be bent outwardly thereby releasing the snap connection with the male coupling element. Thereby, the male coupling element can be pulled out of the receiving area 2.2 of the connector main body 2.

The locking mechanism 3 comprises two or more spring elements 6 which are circumferentially distributed around a wall portion of the connector main body 2. Said spring elements 6 are coupled by a coupling ring 5 at their bottom portions. So, the spring elements 6 protrude from the coupling ring 5 at an upper side. Said coupling ring 5 may encompass the connector main body 2 circumferentially. Said coupling ring 5 comprising said spring elements 6 may be integrally formed, i.e. the coupling ring 5 and the spring elements 6 form a single-piece element which is in the following referred to as locking subassembly 3.2.

Said locking subassembly 3.2 is manufactured using a two-component or multi-component injection moulding technique. Said two-component or multi-component injection moulding technique uses two or more different polymers, specifically thermoplastic polymers which are merged such that the polymers stay separated from each other but are coupled by adhesion or (in case of non-adhesive plastics) by form-fit engagement. Said polymers may comprise different material properties (e.g. elasticity, degree of hardness, coefficient of friction etc.) in order to be adapted to the respective task to be fulfilled by the respective portion of the locking subassembly 3.2.

According to embodiments, the spring elements 6 may be made of a first polymer and the coupling ring 5 may be made by a second polymer different to the first one. However, it may also be possible that the spring elements 6 are made of two or more polymers. Thereby it is possible that different portions of the spring elements 6 are made of different polymers in order to adapt the portions to their specific application.

In addition, the locking subassembly 3.2 may comprise two or more snap hooks 4. So in other words, the snap hooks 4 may be integrally formed at the locking subassembly 3.2 which - as mentions before - also comprises the spring elements 6 and the coupling ring 5. The snap hooks 4 may be coupled with the coupling ring 5 at a foot portion.

By using said two-component or multi-component injection moulding technique, the snap hooks 4 can be built by the same polymer or different polymers than the coupling ring 5 and/or, respectively, the spring elements 6.

In one embodiment, the snap hooks 4 may even comprise multiple portions built by or made from different polymers. Thereby it may, for example, be possible to form an upper portion of the snap hooks 4 using a harder polymer and a middle portion using a polymer with a greater elasticity.

Fig. 2 shows a spring element 6 which can be used for spring-loading the sleeve 3.1. As shown in Fig. 1, said spring element 6 may be arranged at the outer surface of the connector main body 2, i.e. in a space between a wall portion of the connector main body 2 and said sleeve 3.1. The spring element 6 comprises a ring-shaped or circular-shaped or oval-shaped spring body 6.1 which can be deformed by a pressure applied to the spring body 6.1. When applying pressure to said spring body 6.1, the side portions of the spring body 6.1 may bend outwardly thereby reducing the height h of the spring element 6. The spring element 6 is made of a flexible material which is reversibly deformable. So, in case that the applied force is deactivated, the spring element 6 returns into its original shape thereby pushing the sleeve 3.1 into its initial position.

The spring element 6 may further comprise a top portion 6.2 and a bottom portion 6.3, wherein the top portion 6.2 and/or the bottom portion 6.3 comprises a bar-shaped protrusion. Said bar-shaped protrusion provides a contact surface for the sleeve 3.1, respectively, the stop portion 2.3 provided at the connector main body 2. Thereby the application of force into the spring body 6.1 is improved. The spring element 6 may be concavely shaped in order to be able to adapt to the curved shape of the connector main body 2. The height of the spring body 6.1 (measured parallel to the central axis) may be greater than the width of the spring body 6.1 (measured perpendicular to the central axis).

Using upper-mentioned two-component or multi-component injection moulding technique, the spring body 6.1, specifically lateral portions of the oval-shaped spring body 6.1 bent outwardly when applying mechanical force to the spring element 6 can be manufactured using a material with higher elasticity compared to portions which are not elastically deformed (e.g. the top portion 6.2 and the bottom portion 6.3).

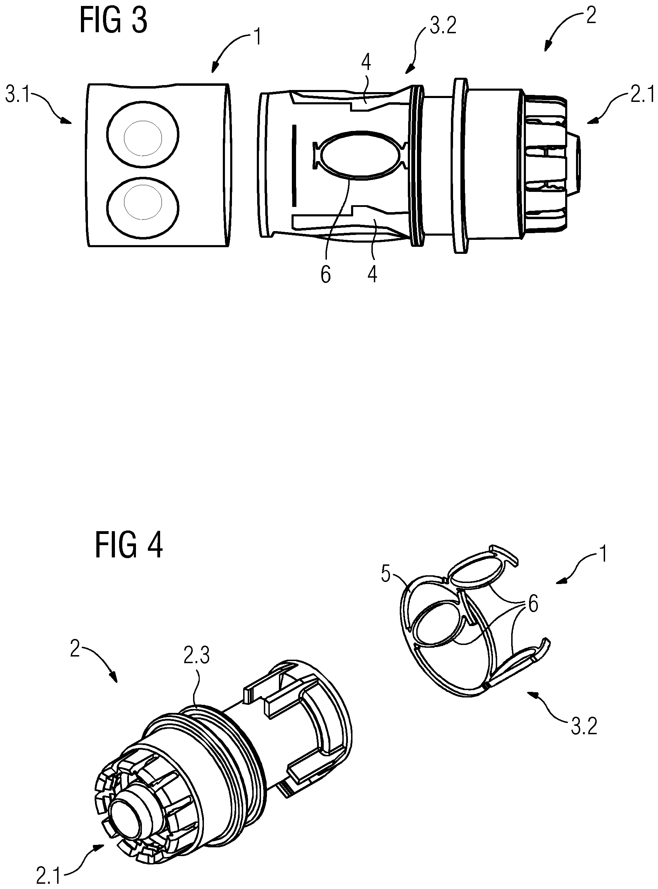

Fig. 3 shows the quick connector 1 in a partly disassembled state in which the coupling ring 5 is visible. As mentioned before, the coupling ring 5 interconnects the snap hooks 4 and the spring elements 6. Said interconnection may be obtained at the lower side of the snap hooks 4 and the spring elements 6. The snap hooks 4 may be evenly distributed along the circumference and the spring elements 6 may be arranged between a pair of adjacent snap hooks 4. Preferably, three snap hooks 4 and three spring elements 6 may be provided at the coupling ring 5. It is worth mentioning that also more or less snap hooks 4 / spring elements 6 can be used.

The coupling ring 5 comprising the snap hooks 4 and the spring elements 6 can be fixed at the connector main body 2 based on different techniques. First, the connector main body 2 may be adapted to provide an interlocking connection with the coupling ring 5. For example, the connector main body 2 may comprise one or more hooks or recesses adapted to interact with inversely formed portions at the coupling ring 5 in order to secure the coupling ring 5 at the connector main body 2 (Fig. 4). The coupling ring 5 is secured at the connector main body 2 based on a tight fit. For example, a material shrinkage during a cooling down of the coupling ring 5 can be used for providing a tight fit of said coupling ring 5 at the connector main body 2.

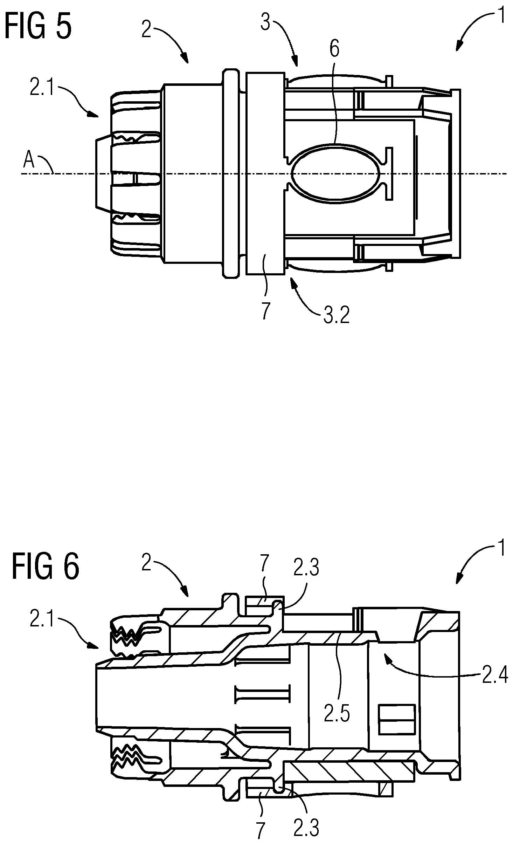

Furthermore, as shown in Fig. 5 and 6, the coupling ring 5 is secured at the connector main body 2 based on an over-moulded material portion 7. The over-moulded material portion 7 secures the coupling ring 5 by form-fitted enclosing a contour of the connector main body 2. For example, the connector main body 2 may comprise one or more protrusions (e.g. the stop portion 2.3 formed by a collar) at its outer surface which are arranged close to the coupling ring 5 and said coupling ring 5 is secured at the connector main body 2 by over-moulding said coupling ring 5 and said one or more protrusions. For over-moulding, a two-component-injection moulding process or multi-component injection moulding process can be used. The injection moulding process may be chosen such that the polymers do not merge but stay separated from each other and are interconnected by adhering forces of the polymers. Alternatively or in addition, the connector main body 2 may comprise one or more recesses wherein during over-moulding the coupling ring 5, said recesses are filled with a polymer. Thereby a form-fitted connection between the connector main body 2 and the material providing the over-moulding of the coupling ring 5 is obtained.

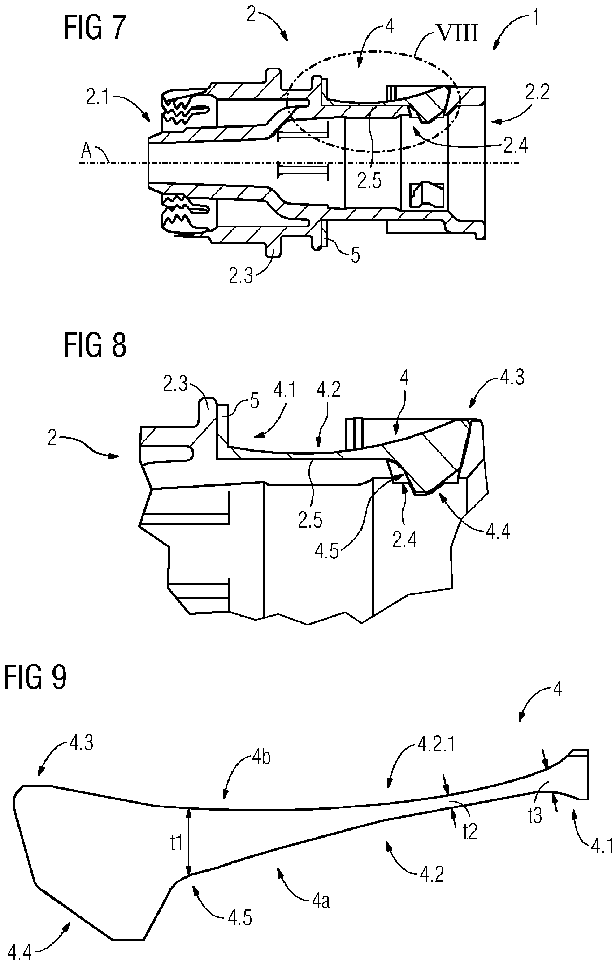

Fig. 7 to 9 show the snap hook 4 and its integration into the quick connector 1 in greater detail. The snap hook 4 comprises a foot portion 4.1, a bending portion 4.2 and an upper portion 4.3. In the assembled state of the quick connector 1, the upper portion 4.3 may be arranged in close proximity to the opening 2.4 through which the hook portion 4.4 of the snap hook 4 protrudes into the receiving area 2.2. The foot portion may be arranged towards the hose receiving portion 2.1 and the bending portion 4.2 is arranged between said foot portion 4.1 and said upper portion 4.3. The longitudinal axis of the snap hook 4 may be arranged parallel or essentially parallel to the central axis A of the quick connector 1. In addition, the snap hook 4 comprises a front side 4a and a back side 4b. Said hook portion 4.4 may be provided at said front side 4a and said back side 4b may be arranged opposite to the front side 4a.

As shown in Fig. 7, the connector main body 2 may comprise a recess or support area 2.5 at which at least a portion of the snap hook 4, specifically the front side 4a in the area of the bending portion 4.2 rests on. The foot portion 4.1 of the snap hook may be adapted to rest at a stop portion 2.3. Said stop portion 2.3 may be formed by a collar provided at the outer surface of the connector main body 2.

As shown in Fig. 8 and 9, the snap hook 4 may comprise a hammer-like shape. In order to improve the bending behaviour and the restoring force of the snap hook 4, the bending area 4.2 is tapered. Preferably, the bending portion 4.2 is tapered towards the upper portion 4.3. In addition, the bending portion 4.2 may also be tapered towards the foot portion 4.1. So in other words, the bending portion 4.2 may be double-tapered. The bending portion 4.2 may comprise a centre area 4.2.1 which comprises a thickness t2. The thickness of the bending portion 4.2 may increase in the direction to the upper portion 4.3, respectively the hook portion 4.4 such that the thickness t1 of the bending portion close to the transition area between said bending portion 4.2 and the upper portion 4.3 is greater than the thickness t2 (t1 > t2). For example, the thickness t1 may be at least douple the thickness t2 (t1 ≥ 2*t2). Thereby the bending behaviour and the restoring forces of the snap hook 4 are improved. In general the radius or curvature as well as the thickness as well as the length and the width of the snap hook 4, in particular its bending portion 4.2, have an influence on the flexibility or elastic resilient forces and the retaining forces and the snapping forces.
In addition, the snap hook 4 may be curved at its back side 4b. Said back side 4b may comprise a concave shape which may open outwardly, i.e. towards the movable sleeve 3.1 surrounding the snap hook 4.

At the front side 4a, the snap hook 4 may comprise a rounded transition area 4.5 based on which the bending portion 4.2 merges into the upper portion 4.3. Said transition area 4.5 may be adapted to abut against an edge of the opening 2.4 in order to limit the inwardly directed bending of the snap hook 4. The hook portion 4.4 may be formed by multiple planar or essentially planar surfaces. Said planar surfaces may be inclined with respect to each other in order to build an engagement portion adapted to interact with a groove or recess of the male coupling element. Said planar surfaces may be connected by edges or rounded transitions. The upper portion 4.3 of the snap hook 4 may be massive, i.e. the upper portion 4.3 is not deformed when operating the locking mechanism.

The length of the bending portion 4.2 may be chosen such that the bending portion 4.2 comprises at least twice the length of the upper portion 4.3, preferably more than the double length of the upper portion 4.3. The snap hook 4 may in one embodiment comprise a length (measured along its longitudinal axis) of at least 15mm, preferably at least 20mm, most preferably 21,5mm.

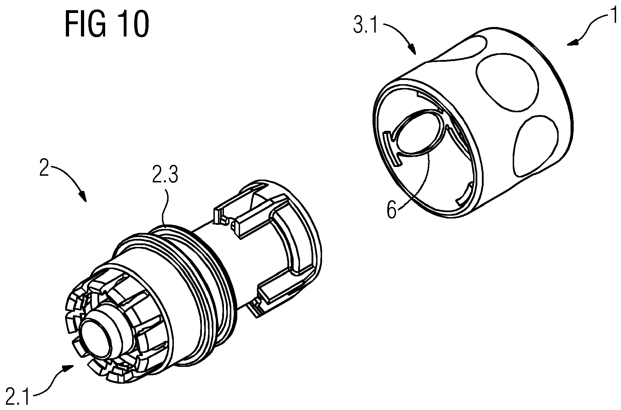

According to other embodiments, as shown in Fig. 10, the spring elements 6 can be also included in the sleeve 3.1. The spring elements 6 may be provided within the sleeve 3.1 using a multi-component injection moulding process. Preferably, the spring elements 6 are directly injection-moulded at the inner surface of the sleeve 3.1. The sleeve 3.1 may comprise a contour or one or more recesses for providing a positive connection between the spring elements 6 and the sleeve 3.1.

It should be noted that the description and drawings merely illustrate the principles of the proposed quick connector. Those skilled in the art will be able to implement various arrangements that, although not explicitly described or shown herein, embody the principles of the invention.

### List of reference numerals

- 1: quick connector
- 2: connector main body
- 2.1: hose receiving portion
- 2.2: receiving area
- 2.3: stop portion
- 2.4: opening
- 2.5: support area
- 3: locking mechanism
- 3.1: sleeve
- 3.2: locking subassembly
- 4: snap hook
- 4a: front side
- 4b: back side
- 4.1: foot portion
- 4.2: bending portion
- 4.2.1: centre area
- 4.3: upper portion
- 4.4: hook portion
- 4.5: transition area
- 5: coupling ring
- 6: spring element
- 6.1: spring body
- 6.2: top portion
- 6.3: bottom portion
- 7: overmoulded material portion

- A: central axis
- h: height
- t1: thickness
- t2: thickness
- t3: thickness

## Claims

1. A Quick connector for coupling a hose at a male coupling element comprising:
a connector main body (2) with a hose receiving portion (2.1),
a receiving area (2.2) adapted to receive a portion of said male coupling element and
a locking mechanism (3) adapted to lock the male coupling element at the quick connector in a position in which said male coupling element is partially inserted in said receiving area (2.2), wherein said locking mechanism (3) comprises two or more snap hooks (4) adapted to interact with the male coupling element in order to lock the male coupling element in the inserted state, and
a spring-loaded sleeve (3.2) movably mounted at the connector main body (2), wherein two or more spring elements (6) are provided which are coupled by means of a coupling ring (5),
**Characterized in that:**
the two or more spring elements (6) and the coupling ring (5) are integrally formed at a locking subassembly (3.2) which is formed by a two-component or multi-component injection moulding element, wherein the coupling ring (5) is secured at the connector main body (2) based on an over-moulded material portion (7) by form-fitted enclosing a contour of the connector main body (2).

2. Quick connector according to claim 1, wherein each spring element (6) is built by a single polymer.

3. Quick connector according to claim 1, wherein each spring element comprises multiple portions which are built by different polymers.

4. Quick connector according to anyone of the preceding claims, wherein the coupling ring (5) and the spring elements (6) are at least partially built by different polymers.

5. Quick connector according to anyone of the preceding claims, wherein two or more snap hooks (4) are integrally formed at the coupling ring (5).

6. Quick connector according to anyone of the preceding claims, wherein said snap hooks (4) comprise the same or a different polymer as the spring elements (6), respectively the coupling ring (5).

7. Quick connector according to anyone of the preceding claims, wherein the snap hook (4) comprises different portions which are made of the same polymer or different polymers.

8. Quick connector according to anyone of the preceding claims 5 to 7, wherein a snap hook (4) is provided between a pair of spring elements (6).

9. Quick connector according to anyone of the preceding claims, wherein the spring element (6) comprises an oval-shaped spring body (6.1).

10. Quick connector according to anyone of the preceding claims, wherein the spring element (6) comprises bar-shaped top and bottom portions (6.2, 6.3).

11. Quick connector according to anyone of the preceding claims, wherein said connector main body (2) comprises one or more stop portions (2.3) at which the coupling ring (5) rests on.

12. Quick connector according to claim 11, wherein the stop portion (2.3) of the connector main body (2) and the coupling ring (5) are over-moulded using a two-component or multi-component injection moulding technique.

13. Quick connector according to anyone of the preceding claims, wherein the coupling ring (5) is fixed at the connector main body (2) by a form-locking or force-fitting connection.

14. Method for manufacturing a quick connector (1) adapted to couple a hose at a male coupling element, the quick connector (1) comprising:
a connector main body (2) with a hose receiving portion (2.1),
a receiving area (2.2) adapted to receive a portion of said male coupling element,
a locking mechanism (3) adapted to lock the male coupling element at the quick connector in a position in which said male coupling element is partially inserted in said receiving area (2.2), wherein the locking mechanism (3) comprises two or more snap hooks (4) adapted to interact with the male coupling element in order to lock the male coupling element in the inserted state, and
a spring-loaded sleeve (3.1) movably mounted at the connector main body (2), wherein two or more spring elements (6) are provided which are coupled by means of a coupling ring (5),
**Characterized in that:**
the two or more spring elements (6) and the coupling ring (5) are integrally formed at a locking subassembly (3.2) which is formed by a two-component or multi-component injection moulding element, wherein the coupling ring (5) is secured at the connector main body (2) based on an over-moulded material portion (7) by form-fitted enclosing a contour of the connector main body (2).

15. Method according to claim 14, wherein the connector main body (2) comprises a stop portion (2.3) and wherein said stop portion (2.3) of the connector main body (2) and the coupling ring (5) are over-moulded using two-component or multi-component injection moulding.

## Patentansprüche

1. Schnellverbinder zum Verbinden eines Schlauches an einem Steckverbindungselement, umfassend:
einen Verbinderhauptkörper (2) mit einem Schlauchaufnahmeabschnitt (2.1),
einen Aufnahmebereich (2.2), der zur Aufnahme eines Abschnitts des Steckverbindungselements angepasst ist, und
einen Verriegelungsmechanismus (3), der angepasst ist, um das Steckverbindungselement am Schnellverbinder in einer Position zu verriegeln, in der das Steckverbindungselement teilweise in den Aufnahmebereich (2.2) eingeführt ist, wobei der Verriegelungsmechanismus (3) zwei oder mehr Schnapphaken (4) umfasst, die ausgelegt sind, um mit dem Steckverbindungselement zusammenzuwirken, um das Steckverbindungselement in dem eingeführten Zustand zu verriegeln, und
eine federbelastete Hülse (3.2), die beweglich an dem Verbinderhauptkörper (2) angebracht ist, wobei zwei oder mehr Federelemente (6) vorgesehen sind, die mittels eines Verbindungsrings (5) verbunden sind,
**dadurch gekennzeichnet, dass**:
die zwei oder mehr Federelemente (6) und der Verbindungsring (5) einstückig an einer Verriegelungsuntereinheit (3.2) gebildet sind, die durch ein Zwei- oder Mehrkomponentenspritzgusselement gebildet ist, wobei der Verbindungsring (5) am Verbinderhauptkörper (2) anhand eines umspritzten Materialabschnitts (7) durch formschlüssiges Umschließen einer Kontur des Verbinderhauptkörpers (2) befestigt ist.

2. Schnellverbinder nach Anspruch 1, wobei jedes Federelement (6) aus einem einzelnen Polymer aufgebaut ist.

3. Schnellverbinder nach Anspruch 1, wobei jedes Federelement mehrere Abschnitte umfasst, die durch unterschiedliche Polymere aufgebaut sind.

4. Schnellverbinder nach einem der vorhergehenden Ansprüche, wobei der Verbindungsring (5) und die Federelemente (6) zumindest teilweise aus unterschiedlichen Polymeren aufgebaut sind.

5. Schnellverbinder nach einem der vorhergehenden Ansprüche, wobei zwei oder mehr Schnapphaken (4) am Verbindungsring (5) einstückig gebildet sind.

6. Schnellverbinder nach einem der vorhergehenden Ansprüche, wobei die Schnapphaken (4) dieselben oder ein unterschiedliches Polymer wie jeweils die Federelemente (6) oder der Verbindungsring (5) umfassen.

7. Schnellverbinder nach einem der vorhergehenden Ansprüche, wobei der Schnapphaken (4) unterschiedliche Abschnitte umfasst, die aus demselben Polymer oder aus unterschiedlichen Polymeren hergestellt sind.

8. Schnellverbinder nach einem der vorhergehenden Ansprüche 5 bis 7, wobei ein Schnapphaken (4) zwischen einem Paar Federelementen (6) vorgesehen ist.

9. Schnellverbinder nach einem der vorangehenden Ansprüche, wobei das Federelement (6) einen ovalförmigen Federkörper (6.1) umfasst.

10. Schnellverbinder nach einem der vorangehenden Ansprüche, wobei das Federelement (6) stabförmige obere und untere Abschnitte (6.2, 6.3) umfasst.

11. Schnellverbinder nach einem der vorhergehenden Ansprüche, wobei der Verbinderhauptkörper (2) ein oder mehrere Anschlagabschnitte (2.3) umfasst, an denen der Verbindungsring (5) anliegt.

12. Schnellverbinder nach Anspruch 11, wobei der Anschlagabschnitt (2.3) des Verbinderhauptkörpers (2) und der Verbindungsring (5) im Zwei- oder Mehrkomponentenspritzgussverfahren umspritzt sind.

13. Schnellverbinder nach einem der vorhergehenden Ansprüche, wobei der Verbindungsring (5) durch eine form- oder kraftschlüssige Verbindung am Verbinderhauptkörper (2) befestigt ist.

14. Verfahren zur Herstellung eines Schnellverbinders (1), der ausgelegt ist, um einen Schlauch mit einem Steckverbindungselement zu verbinden, wobei der Schnellverbinder (1) umfasst:
einen Verbinderhauptkörper (2) mit einem Schlauchaufnahmebereich (2.1),
einen Aufnahmebereich (2.2), der angepasst ist, um einen Abschnitt des Steckverbindungselements aufzunehmen,
einen Verriegelungsmechanismus (3), der angepasst ist, um das Steckverbindungselement an dem Schnellverbinder in einer Position zu verriegeln, in der das Steckverbindungselement teilweise in den Aufnahmebereich (2.2) eingeführt ist, wobei der Verriegelungsmechanismus (3) zwei oder mehr Schnapphaken (4) umfasst, die ausgelegt sind, um mit dem Steckverbindungselement zusammenzuwirken, um das Steckverbindungselement in dem eingeführten Zustand zu verriegeln, und
eine federbelastete Hülse (3.1), die beweglich an dem Verbinderhauptkörper (2) angebracht ist, wobei zwei oder mehr Federelemente (6) vorgesehen sind, die über einen Verbindungsring (5) verbunden sind,
**dadurch gekennzeichnet, dass**:
die zwei oder mehr Federelemente (6) und der Verbindungsring (5) einstückig an einer Verriegelungsuntereinheit (3.2) gebildet sind, die durch ein Zwei- oder Mehrkomponenten-Spritzgusselement gebildet ist, wobei der Verbindungsring (5) am Verbinderhauptkörper (2) anhand eines umspritzten Materialabschnitts (7) durch formschlüssiges Umschließen einer Kontur des Verbinderhauptkörpers (2) befestigt ist.

15. Verfahren nach Anspruch 14, wobei der Verbinderhauptkörper (2) einen Anschlagabschnitt (2.3) umfasst und wobei der Anschlagabschnitt (2.3) des Verbinderhauptkörpers (2) und der Verbindungsring (5) im Zwei- oder Mehrkomponentenspritzguss umspritzt werden.

## Revendications

1. Raccord rapide pour coupler un tuyau à un élément de couplage mâle comprenant :
un corps principal de raccord (2) avec une portion de réception de tuyau (2.1),
une zone de réception (2.2) apte à recevoir une portion dudit élément de couplage mâle et
un mécanisme de verrouillage (3) apte à verrouiller l'élément de couplage mâle au niveau du raccord rapide dans une position dans laquelle ledit élément de couplage mâle est partiellement inséré dans ladite zone de réception (2.2), dans lequel ledit mécanisme de verrouillage (3) comprend deux ou plusieurs crochets d'encliquetage (4) aptes à interagir avec l'élément de couplage mâle de façon à verrouiller l'élément de couplage mâle dans l'état inséré, et
un manchon à ressort (3.2) monté de manière mobile au corps principal de raccord (2), dans lequel deux ou plusieurs éléments de ressort (6) sont fournis qui sont couplés au moyen d'une bague de couplage (5),
**Caractérisé en ce que** :
les deux ou plusieurs éléments de ressort (6) et la bague de couplage (5) sont formés de manière solidaire au niveau d'un sous-ensemble de verrouillage (3.2) qui est formé par un élément de moulage par injection à deux ou plusieurs composants, dans lequel la bague de couplage (5) est attachée au corps principal de raccord (2) sur la base d'une portion de matériau surmoulé (7) en enfermant par complémentarité de forme un contour du corps principal de raccord (2).

2. Raccord rapide selon la revendication 1, dans lequel chaque élément de ressort (6) est construit en un seul polymère.

3. Raccord rapide selon la revendication 1, dans lequel chaque élément de ressort comprend de multiples portions qui sont construites en différents polymères.

4. Raccord rapide selon l'une quelconque des revendications précédentes, dans lequel la bague de couplage (5) et les éléments de ressort (6) sont au moins partiellement construits en différents polymères.

5. Raccord rapide selon l'une quelconque des revendications précédentes, dans lequel deux ou plusieurs crochets d'encliquetage (4) sont formés de manière solidaire au niveau de la bague d'accouplement (5).

6. Raccord rapide selon l'une quelconque des revendications précédentes, dans lequel lesdits crochets d'encliquetage (4) comprennent le même ou un polymère différent par rapport aux éléments de ressort (6), respectivement la bague de couplage (5).

7. Raccord rapide selon l'une quelconque des revendications précédentes, dans lequel le crochet d'encliquetage (4) comprend différentes portions qui sont faites du même polymère ou de polymères différents.

8. Raccord rapide selon l'une quelconque des revendications précédentes 5 à 7, dans lequel un crochet d'encliquetage (4) est fourni entre une paire d'éléments de ressort (6).

9. Raccord rapide selon l'une quelconque des revendications précédentes, dans lequel l'élément de ressort (6) comprend un corps de ressort (6.1) de forme ovale.

10. Raccord rapide selon l'une quelconque des revendications précédentes, dans lequel l'élément de ressort (6) comprend des portions supérieure et inférieure (6.2, 6.3) en forme de barre.

11. Raccord rapide selon l'une quelconque des revendications précédentes, dans lequel ledit corps principal de raccord (2) comprend une ou plusieurs portions d'arrêt (2.3) sur lesquelles repose la bague de couplage (5).

12. Raccord rapide selon la revendication 11, dans lequel la portion d'arrêt (2.3) du corps principal de raccord (2) et la bague de couplage (5) sont surmoulées en utilisant une technique de moulage par injection à deux ou plusieurs composants.

13. Raccord rapide selon l'une quelconque des revendications précédentes, dans lequel la bague de couplage (5) est fixée au corps principal de raccord (2) par une liaison par complémentarité de forme ou à force.

14. Procédé de fabrication d'un raccord rapide (1) apte à coupler un tuyau à un élément de couplage mâle, le raccord rapide (1) comprenant :
un corps principal de raccord (2) avec une portion de réception de tuyau (2.1),
une zone de réception (2.2) apte à recevoir une portion dudit élément de couplage mâle,
un mécanisme de verrouillage (3) apte à verrouiller l'élément de couplage mâle au niveau du raccord rapide dans une position dans laquelle ledit élément de couplage mâle est partiellement inséré dans ladite zone de réception (2.2), dans lequel le mécanisme de verrouillage (3) comprend deux ou plusieurs crochets d'encliquetage (4) aptes à interagir avec l'élément de couplage mâle de façon à verrouiller l'élément de couplage mâle dans l'état inséré, et
un manchon à ressort (3.1) monté de manière mobile au corps principal de raccord (2),
dans lequel deux ou plusieurs éléments de ressort (6) sont fournis qui sont couplés au moyen d'une bague de couplage (5),
**Caractérisé en ce que** :
les deux ou plusieurs éléments de ressort (6) et la bague de couplage (5) sont formés de manière solidaire au niveau d'un sous-ensemble de verrouillage (3.2) qui est formé par un élément de moulage par injection à deux ou plusieurs composants, dans lequel la bague de couplage (5) est attachée au corps principal de raccord (2) sur la base d'une portion de matériau surmoulé (7) en enfermant par complémentarité de forme un contour du corps principal de raccord (2).

15. Procédé selon la revendication 14, dans lequel le corps principal de raccord (2) comprend une portion d'arrêt (2.3) et dans lequel ladite portion d'arrêt (2.3) du corps principal de raccord (2) et la bague de couplage (5) sont surmoulées en utilisant un moulage par injection à deux ou plusieurs composants.
